(19) Europäisches Patentamt
European Patent Office
Office européen des brevets

(11) Publication number: **0 266 405 B1**

(12) # EUROPEAN PATENT SPECIFICATION

(45) Date of publication of patent specification :
17.07.91 Bulletin 91/29

(51) Int. Cl.⁵ : **C23F 13/00**

(21) Application number : 87903275.3

(22) Date of filing : 05.05.87

(86) International application number :
PCT/DK87/00049

(87) International publication number :
WO 87/06959 19.11.87 Gazette 87/25

(54) CONCRETE BALLAST BLOCK WITH IMBEDDED OR ATTACHED ANODES FOR CATHODIC PROTECTION OF THE BOLTS AND THEIR FITTINGS.

(30) Priority : 09.05.86 DK 2146/86

(43) Date of publication of application :
11.05.88 Bulletin 88/19

(45) Publication of the grant of the patent :
17.07.91 Bulletin 91/29

(84) Designated Contracting States :
AT BE CH DE FR GB IT LI LU NL SE

(56) References cited :
DE-A- 3 132 321
SE-B- 325 764
SE-B- 379 378
SE-B- 422 832

(73) Proprietor : HANSEN, Svend Martin
Blomsterhaven 55
DK-4300 Holbaek (DK)

(72) Inventor : HANSEN, Svend Martin
Blomsterhaven 55
DK-4300 Holbaek (DK)

(74) Representative : Roerboel, Leif et al
c/o Dansk Patent Kontor A/S H.C. Oerstedsvej
70
DK-1879 Frederiksberg C (DK)

EP 0 266 405 B1

## Description

The invention concerns a cathodic protection device for the metal bolts/screws which are to be used for attaching and fastening two-parted ballastblocks onto pipelines which pipelines are to be placed on or into the bottom of sea or lakes.

Cathodic protection of metal parts has been known and used for many years, mainly for marine purposes.

Thus, this form for protection of metalparts against corrosion has in a wide extend been used at, for example :

In marine vessels, below the water level, at openings in the sides (boards), at rudder parts and stern tube flanges, blocks of zinc have been placed as anodes.

These anodes emits metal particles as an equivalent amount of particles of the same material or an equivalent amount of particles with the same number of ions as contained in the mentioned parts would disappear if there was not anodes to compensate for this.

Different assembling methods for the two-parted ballastblock, such as clamps, yokes, bows, clips, straps etc. has been tried, but it is acknowledged within this trade, that these methods not makes a sufficiently safe hold (grip) of ballastblocks onto for example plasticpipelines, which are to be floated out and submerged into lake — or seabottom.

The experience shows, that the attachment of two-parted ballastblocks onto pipelines, for example plasticpipelines, is to be done best and safest with the use of metal bolts after the well-known technique.

In order to protect the mentioned bolts against corrosion, zinc— or other metalblocks which are to be attached at the outer surfaces of the ballastblock, often to the bolt ends, are used in a wide extend.

The characteristic feature of my invention is, that the anodes exists of metallic pipes which are to be imbedded in the concrete — ballastblock and this metallic pipes are to be placed where the long boltholes — according to the known technique — are placed, and in such a way that the centerlines of the pipeformed anodes, or their symmetrical axes, are identically with the centerlines of the long boltholes in the ballastblock. Consequently, this feature ensures, that the anodes will not be forgotten at the attaching-/mounting operation of the ballastblocks to the pipeline and the cathodic protection of the bolts become more safe and effective because the galvanic field of stress (galvanic action) becomes minimal by the fact, that the anodes, placed in this way will surround the bolt shanks which bolt shanks etc. the anodes shall protect against corrosion. By forming the anodes as pipes, which are to be imbedded in the ballastblock, ensures furthermore, that the long boltholes in the ballastblock becomes straight and formstable, which—until now—has been a problem for the manufacturers of the ballastblocks of concrete.

A simple performance for the arrangement according to the invention consist in, that the anodes consists of cylindrical pipes. This design gives the simplest and cheapest performance, because the devices for fastening and positioning the anodes in the concrete ballastblock- mould can be made from very simple parts (elements).

According to the invention it can, however, be appropriately to make this anodes with any other geometrical cross section shape including profiled bars and the like, which are to be imbedded in the ballastblock close to the bolts or on the bolts itselves so, that the anodes surround the boltshank itself.

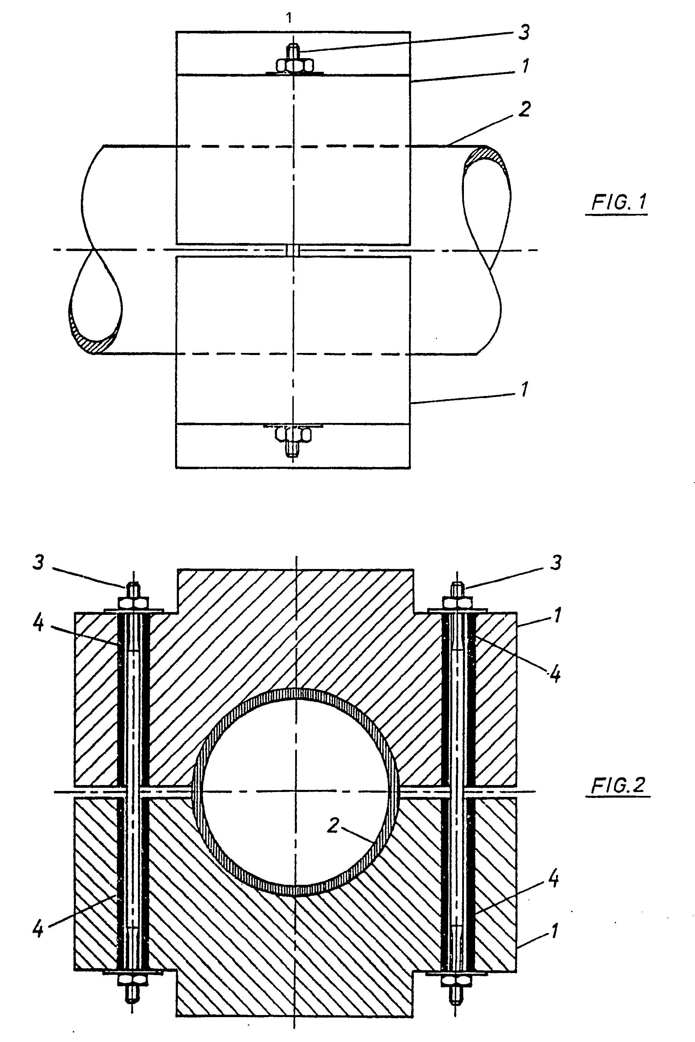

The drawing shows a two-parted ballastblock with imbedded anodes for cathodic protection of bolts/screws with washers and nuts according to the invention, by that fig. 1 shows a two-parted ballastblock viewed from the side in the longitudinal direction of the pipeline and fig. 2 shows the same ballastblock with a vertical cut through the middle of the block at right angles to the longitudinal direction of the pipeline.

The two ballastblock- halfparts 1 are shown attached to a pipe 2 by means of metalbolts 3. The metalbolts 3 are surrounded by metallic anodes 4, which anodes 4 are imbedded in the ballastblock- halfparts 1.

In the on the drawing shown design only anodes with cylindrical pipe-shape are indicated, but there is nothing to prevent the use of anodes with any other geometrical cross section shape and sectionalizing such as bushes or bar- pieces, placed in the long boltholes or directly onto the boltshanks.

## Claims

1. A concrete counterweight ballast block (1) with imbedded anodes (4) for cathodic protection of metal bolts and belonging parts, which are used for attaching and fastening the two-parted counterweight ballastblock (1) to a pipeline (2) to be placed on or into the bottom of the sea or a lake, **characterized** in that the anodes (4) are constituted by metallic pipes or the like, which are imbedded in the concrete ballast block (1), and which are placed in the places, in which the oblong bolt holes (3) are placed, in such a manner that the centre lines or the symmetry axes of the anodes (4) are mainly identical with the centre lines of the oblong bolt holes (3) of the ballast blocks (1).

2. A concrete counterweight ballastblock with imbedded anodes for cathodic protection of bolts according to claim 1, **characterized** in that the anode is a cylindrical pipe.

3. A concrete counterweight ballastblock with imbedded anodes for cathodic protection of bolts according to claim 1 or 2, **characterized** in that the anode is constituted by profiled bars, which surround the bolt.

## Patentansprüche

1. Beton-Gegengewicht-Ballastblock (1) mit eingebetteten Anoden (4) zum kathodischen Schutz von Metallbolzen und zugehörigen Teilen, die verwendet werden zur Anbringung und Befestigung des zweiteiligen Gegengewicht-Ballastblocks (1) an eine Rohrleitung (2), die auf dem Meeres- oder Seeboden verlegt oder versenkt wird, dadurch gekennzeichnet, daß die Anoden (4) aus Metall- oder ähnlichen Rohren bestehen, die in den Beton-Ballastblock (1) eingebettet sind, und die dort plaziert sind, wo die länglichen Bolzenlöcher (3) angebracht sind, dergestalt, daß die Mittelachsen oder Symmetrieachsen der Anoden (4) vorwiegend identisch sind mit den Mittelachsen der länglichen Bolzenlöcher (3) des Ballastblocks.

2. Beton-Gegengewicht-Ballastblock mit eingebetteten Anoden zum kathodischen Schutz von Bolzen nach Anspruch 1, dadurch gekennzeichnet, daß die Anode ein zylindrisches Rohr ist.

3. Beton-Gegengewicht-Ballastblock mit eingebetteten Anoden zum kathodischen Schutz von Bolzen nach Anspruch 1 oder 2, dadurch gekennzeichnet, daß die Anode aus profilierten Stäben besteht, die den Bolzen umgeben.

## Revendications

1. Bloc de ballast en béton pour contrepoids (1) comportant des anodes scellées (4) pour la protection cathodique de boulons en métal et des pièces accessoires utilisés pour maintenir le bloc de ballast en deux parties (1) fixé sur un oléoduc (2) devant être placé au fond de la mer ou d'un lac, caractérisé par le fait que les anodes (4) sont constituées par des tuyaux métalliques ou assimilés, scellés dans le bloc de ballast en béton (1) et placés aux endroits où se trouvent les trous oblongs pour boulons (3), de manière à ce que les lignes médianes ou les axes de symétrie des anodes (4) soient dans l'ensemble identiques aux lignes médianes des trous oblongs pour boulons (3) des blocs de ballast.

2. Bloc de ballast en béton pour contrepoids comportant des anodes scellées pour la protection cathodique de boulons aux termes de la revendication 1 ci-dessus, caractérisé par le fait que l'anode est un tuyau cylindrique.

3. Bloc de ballast en béton pour contrepoids comportant des anodes scellées pour la protection cathodique de boulons aux termes des revendications 1 et 2 ci-dessus, caractérisé par le fait que l'anode est constituée par des barres profilées entourant le boulon.

_FIG. 1_

_FIG.2_